# EUROPEAN PATENT APPLICATION

(11) **EP 1 361 527 A1**
(43) Date of publication of application: **12.11.2003**
(21) Application number: 02445054.6
(22) Date of filing: 07.05.2002
(51) Int. Cl.: G06F 17/60, G06F 1/00

(54) **Method for loading an application in a device, device and smart card therefor**

(71) Applicant: Sony Ericsson Mobile Communications AB, 221 88 Lund (SE)
(72) Inventor: Andersson, Stefan, 230 41 Klagerup (SE)
(74) Representative: Akerman, Marten Lennart

(57) **Abstract**

The invention relates to a method for loading an application (2) into a device (1), and generally to downloading of applications into portable devices, typically mobile telephones. The method includes the steps of: downloading the application (2) with a signature to the device; coupling the signature of the application to a predefined attribute certificate stored in the device; and installing the application together with said attribute certificate . Preferably, the signature of the application is coupled to a root certificate which in turn is linking the application to a predefined attribute certificate. The invention also relates to such a device (1) and a smart card (6) usable in such a device.

## Description

### Field of the invention

The present invention relates to a method for loading an application into a device, and more particularly control of the application's interface with the device. The invention also relates to such a device and a smart card usable in such a device.

### State of the art

WO 00/59225 and US-B1-6,223,291 disclose a secure wireless electronic-commerce system with wireless network domain. The system comprises a wireless network operator certification authority having a root public key certificate and at least one attribute authority having a digital certificate that is dependent from the root public key certificate. The attribute authority is accessible by a wireless client device via a wireless network. The digital certificate is delivered from the attribute authority to the wireless device. The attribute authority is verified to the wireless client device using the digital certificate and the root public key certificate preloaded in the wireless client device under authority of the wireless network operator. An attribute is delivered to the wireless client device over the wireless network and ultimately enabled at the wireless client device.

A problem with this kind of system is that attributes are delivered over the wireless network requiring more steps and contacts before an application using the attribute may be installed in the device.

According to the present invention, generic attribute certificates are preloaded in the device. An attribute certificate is linked to an application using a signature and a certificate chain of the downloaded application.

### Summary of the invention

According to a first aspect of the invention, there is provided a method for loading an application in a device.

The method includes the steps of:
downloading the application with a signature to the device;
coupling the signature of the application to a predefined attribute certificate stored in the device;
installing the application coupled to said attribute certificate.

Preferably, the signature of the application is coupled to a root certificate which in turn is linking the application to a predefined attribute certificate.

According to a second aspect of the invention, there is provided a device comprising: means for storing and executing an application in connection with function units, the access of which is controlled through an interface unit.

The device further includes or is connectable to:
means for storing at least one predefined attribute certificate capable of being linked to the application for controlling the interface unit.

Preferably, the predefined attribute certificate is linked to a root certificate also stored in the device.

The device may be a mobile telephone.

According to a third aspect of the invention, there is provided a smart card connectable to a device, the device comprising: means for storing and executing an application in connection with function units, the access of which is controlled through an interface unit.

The smart card includes: means for storing at least one predefined attribute certificate capable of being linked to the application for controlling the interface unit.

Preferably, the predefined attribute certificate is linked to a root certificate also stored in the smart card.

### Brief description of the drawings

The invention will be described below with reference to the accompanying drawings, in which,
fig. 1 is a schematic view of a device according to the invention in a wireless environment, and
fig. 2 is a schematic illustration of the structure of the storage of the various certificates.

### Detailed description of preferred embodiments

The invention relates generally to downloading of applications into portable devices, typically mobile telephones. The user may wish to download new functions or applications, such as tools and games and generally content items, to upgrade the telephone. The applications may be provided by third-party developers, independent from the original telephone manufacturer. For warranty and safety reasons, the user, and often the telephone manufacturer, want to control that the telephone is not rendered inoperable or is damaged by the new application. As is discussed above, a system has been devised in which the authenticity of the application may be checked by means of digital signatures appended to the application, and attribute certificates are downloaded as well to control that the application only is allowed limited access to existing hardware and software through an interface, often called API (Application Programming Interface) in the device.

The debiting and authentication of the user himself forms no part of the invention.

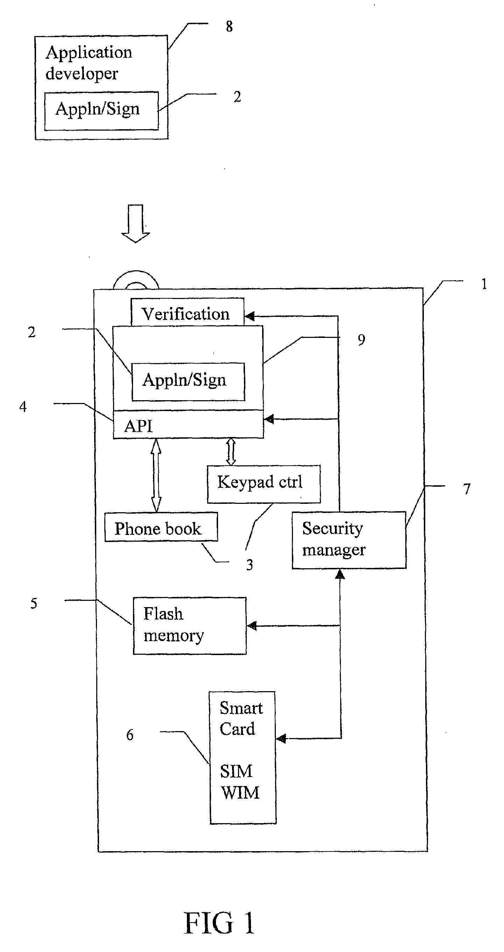

In fig. 1, a device 1 according to an embodiment of the invention is illustrated in a wireless environment. The device may typically be a mobile telephone. Only parts relevant to the invention are shown, while other conventional parts are omitted, such as keypads, radio interfaces etc.

The wanted application 2 is to be installed in an execution environment 9, typically a JAVA environment. The application 2 is supplied by an application developer 8 through the air as symbolised by the arrow.

When the application is installed it will have limited access through an interface unit (API) 4 to function units 3 of the device, such as a phone book or keypad control unit. The application may e.g. be a game, in which the keypad should be controlled in a special manner. In this case the interface unit 4 should allow access to the function unit 3 controlling the keypad. It is desired that the application has limited access right, as small as possible, in order not to interfere with functions that are not used by the application. Of course, the access right varies for different applications.

A security manager 7 checks the verification of the downloaded application and also controls the access rights in the interface unit 4. The access rights are defined by preloaded attribute certificates as is discussed below.

The attribute certificates as well as root certificates are stored in the device either in built-in memories, such as a flash memory 5 or in a smart card 6, connectable to the device 1. A typical example of a smart card in a mobile telephone is a SIM (Subscriber Identity Module) card. The card contains subscriber identity and authentication information and there is also room for storing various user data. The card may also contain a WIM part, a WAP (Wireless Application Protocol) identity module that provides an interface for services relating to wireless Internet as well as data storage services. The smart card preferably uses PKCS#15 (Public Key Cryptography Standard # 15) for object formats. PKCS#15 defines e.g. a file structure on the card.

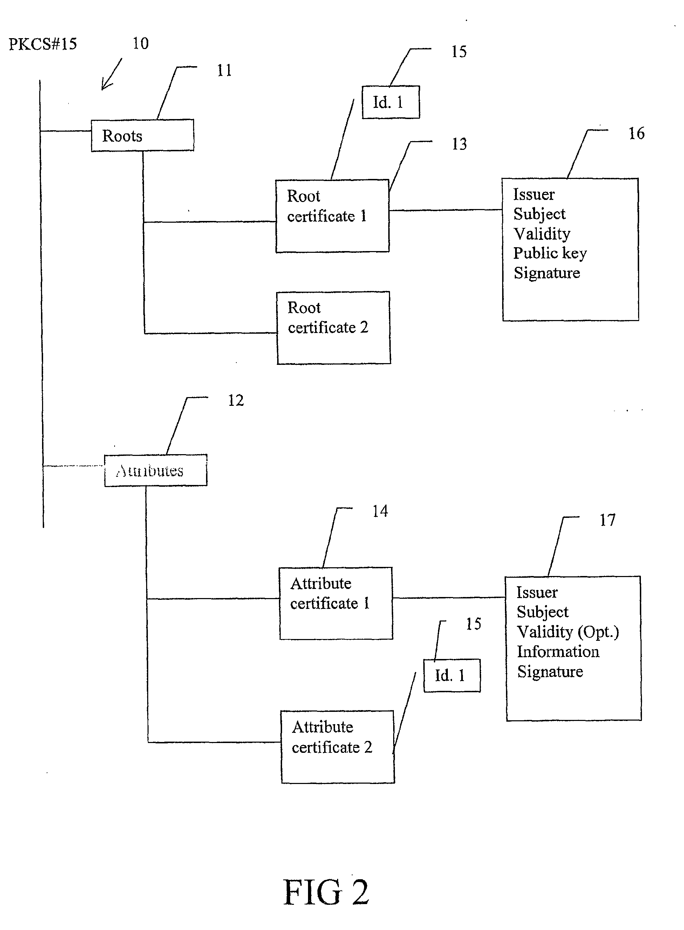

Fig. 2 illustrates an example of a file structure 10 in accordance with the present invention. Root certificates 13 are stored under a catalogue 11 containing all the roots. A root certificate is a public key certificate issued by a certificate authority. A possible structure of a root certificate is shown in box 16. It contains at least information about the issuer, the subject, a validity period, a public key and a signature. In a root certificate the issuer and subject fields have the same value. The digital signature is created by means of the private key associated with the public key and may be used to verify signatures.

Similarly, the attribute certificates 14 are stored under a catalogue 12 containing all the attributes. A possible structure of an attribute certificate is shown in box 17. The attribute certificate contains at least information about the issuer, subject, validity (optional), and a signature and for the purpose of the present invention information about access rights. In other words, the attribute certificate defines a generic profile for controlling the interface 4 in connection with one or several applications to be associated with the profile.

Each root certificate 13 is associated with one attribute certificate 14. In one embodiment a file property of each root certificate 13 contains an identifier field 15 having a specific value. Also, the attribute certificate files 14 contain the same type of file property identifier field 15. When a specific root certificate is selected, the associated attribute file is found by comparing the identifier fields until a match is obtained, i.e. the identifier fields have the same value. In figure 2, Root certificate 1 is associated with Attribute certificate 2.

A 20 byte public key SHA-1 hash may be used as an identifier. The hash value could be stored in PKCS#15 Common Data Object Attributes.iD field.

An example of the procedure for downloading an application into a device is described below. The mobile user finds, e.g. in a browsing session on the Internet, an application from a developer 8. The user downloads the application 2 with a signature and a certificate chain. The security manager 7 takes the signature and follows the certificate chain back to the root certificate stored in the device. The signature verifies the authenticity of the application, if it matches the root certificate.

The identifier 15 of the root certificate 13 is retrieved from the file structure 10. The corresponding attribute certificate 14, having the same value in the identifier field 15, is found. Then the application may be installed in the device with the found attribute certificate controlling the interface unit 4 via the security manager 7.

The file structure 10 may be built in in the device 1 at the manufacturer, e.g. in the flash memory 5. However, storage in a smart card 6, such as a SIM card, gives certain advantages. The attribute certificate can be built into the smart card at the manufacturer thereof or may also be downloaded over the air into the smart card. This enables a telephone operator to change root certificates and attribute certificates in the SIM card, e.g. by using a special toolkit, the SIM-AT (SIM Application Toolkit).

Thus, the present invention provides a system for downloading applications into mobile devices over the air in a secure manner. The invention has several advantages:

The cross reference problem is solved since an attribute certificate can be cross-referenced with the root certificate.

By storing the attribute certificate along with other critical certificates in the trusted certificate directory file, which inherently is write protected, the problem of storing the attribute certificate in a write protected environment is solved.

Since a certificate authority signs attribute certificates, they have a built-in security mechanism. This enables a secure opportunity to download the certificates over the air.

Over the air download of the attribute certificates linked to root certificates could be done in the same way as signed root certificates are downloaded in the WPKI (Wireless Public Key Infrastructure).

Attribute certificates have the potential of being linked to more than one root certificate. This means that authorisation information/permissions can be linked to any certificate in the certificate chain. It can even be linked to something else than an identity carried in a certificate.

The invention can be applied in portable radio communication such as mobile telephones, pagers, communicators, electronic organisers, smartphones and the like. The scope of the invention is only limited by the claims below.

## Claims

1. A method for loading an application (2) in a device (1), **characterised by** the steps of:
downloading the application (2) with a signature to the device (1);
coupling the signature of the application (2) to a predefined attribute certificate (14) stored in the device (1);
installing the application (2) coupled to said attribute certificate (14).

2. A method according to claim 1, **characterised in that** the signature of the application (2) is coupled to a root certificate (13) which in turn is linking the application (2) to a predefined attribute certificate (14).

3. A method according to claim 2, **characterised in that** the application (2) is authenticated against the stored root certificate (13).

4. A method according to claim 2 or 3, **characterised in that** the predefined attribute certificate (14) and the root certificate (13) are stored in files and are linked by having an equal value in their respective file properties (15).

5. A device according to claim 4, **characterised in that** the predefined attribute certificate (14) and the root certificate (15) are stored in a PKCS#15 structure (10).

6. A method according to any one of claims 1 to 5, **characterised in that** the predefined attribute certificate (14) is stored in a flash memory (5).

7. A method according to any one of claims 1 to 5, **characterised in that** the predefined attribute certificate (14) is stored in a smart card (6).

8. A method according to claim 7, **characterised in that** the smart card (6) is a SIM card.

9. A method according to claim 8, **characterised in that** the predefined attribute certificate (14) and the root certificate (13) are capable of being changed by means of a SIM application tool kit.

10. A device (1) comprising:
means (9) for storing and executing an application (2) in connection with function units (3), the access of which is controlled through an interface unit (4),
**characterised in that** the device (1) further includes or is connectable to:
means (5, 6) for storing at least one predefined attribute certificate (14) capable of being linked to the application (2) for controlling the interface unit (4).

11. A device according to claim 10, **characterised in that** the predefined attribute certificate (14) is linked to a root certificate (13) also stored in the device.

12. A device according to claim 11, **characterised in that** the predefined attribute certificate (14) and the root certificate (13) are stored in files and are linked by having an equal value in their respective file properties (15).

13. A device according to claim 12, **characterised in that** the predefined attribute certificate (14) and the root certificate (13) are stored in a PKCS#15 structure (10).

14. A device according to any one of claims 11 to 13, **characterised in that** the device (1) further includes a security check means (7) arranged to authenticate the application (2) and to link the application (2) to a stored root certificate (13).

15. A device according to any one of claims 10 to 14, **characterised in that** the device (1) further includes a flash memory (5) for storing the predefined attribute certificate (14).

16. A device according to any one of claims 10 to 14, **characterised in that** the device (1) is connectable to a smart card (6) for storing the predefined attribute certificate (14).

17. A device according to claim 16, **characterised in that** the smart card (6) is a SIM card.

18. A device according to claim 17, **characterised in that** the predefined attribute certificate (14) and the root certificate (13) are capable of being changed by means of a SIM application tool kit.

19. A device according to any one of claims 10 to 18, **characterised in that** the device (1) is a mobile telephone.

20. A smart card (6) connectable to a device (1), the device comprising:
means (9) for storing and executing an application (2) in connection with function units (3), the access of which is controlled through an interface unit (4),
**characterised in that** the smart card (6) includes:
means for storing at least one predefined attribute certificate (14) capable of being linked to the application (2) for controlling the interface unit (4).

21. A smart card according to claim 20, **characterised in that** the predefined attribute certificate (14) is linked to a root certificate (13) also stored in the smart card (6).

22. A smart card according to claim 21, **characterised in that** the predefined attribute certificate (14) and the root certificate (13) are stored in files and are linked by having an equal value in their respective file properties (15).

23. A smart card according to claim 21 or 22, **characterised in that** the predefined attribute certificate (14) and the root certificate (13) are stored in a PKCS#15 structure (10).

24. A smart card according to claim 20, **characterised in that** the predefined attribute certificate (14) and the root certificate (13) are capable of being changed by means of a SIM application tool kit.
